# EUROPEAN PATENT SPECIFICATION

(11) **EP 2 227 661 B1**
(45) Date of publication and mention of the grant of the patent: **07.10.2015**
(21) Application number: 08849255.8
(22) Date of filing: 14.11.2008
(51) Int. Cl.: F24J 2/08, F24J 2/05, F25B 27/00, F24J 2/04, F24J 2/22, F24J 2/24

(54) **SOLAR THERMAL HEATING SYSTEM**
SOLARWÄRMEHEIZUNGSSYSTEM
SYSTÈME DE CHAUFFAGE THERMIQUE SOLAIRE

(30) Priority: 16.11.2007 SE 0702518
(43) Date of publication of application: 15.09.2010
(73) Proprietor: Intermultilock AB, 444 41 Stenungsund (SE)
(72) Inventor: PETTERSSON, Krister, 444 41 Stenungsund (SE)
(74) Representative: Valea AB
(86) International application number: PCT/SE2008/051311
(87) International publication number: WO 2009/064252

(56) References cited:
- WO-A1-99/10934
- DE-A1- 4 007 839
- DE-A1- 4 007 839
- FR-A1- 2 443 031
- GB-A- 1 172 829
- GB-A- 1 172 829
- JP-A- 8 035 728
- US-A- 3 915 148
- US-A- 4 279 244
- US-A- 5 408 990
- US-A- 5 408 990

## Description

### Technical field

The present invention relates to an improved solar thermal heating system comprising a liquid providing tube line and a translucent or transparent covering.

### Background of the invention

Solar thermal systems differ by the type of collector used to gather and store the sun's energy. Flat plate collectors are the simplest and most common type. Copper pipes wind back and forth through the flat plate collector, which is painted black to absorb heat and covered with glass, or "glazing," to prevent heat from escaping. Often the pipes are painted black and bonded to the material of the flat plate collector to maximize heat absorption.

More advanced systems like evacuated tube collectors and parabolic trough collectors can heat water or other fluids to much higher temperatures appropriate for industrial needs. In the trough like collectors an open semi or partly circular trough is provided with a tube placed along the centre axis of the trough, and the trough being made of a reflecting polished metal material will reflect and concentrate the in coming sun rays to the tube and thereby increasing the efficiency of the collector or solar thermal heater. The trough may also be provided with activators thus enabling it to face in the direction of the sun for optimal efficiency. Such a trough like solution of a collector is suitable in sunny, dry or even arid environments.

However, where a chilly winter may occur and the sun has a lower energy input on the earth surface and/or where the rain or snowfall will substantially reduce the energy reflection the trough like solution is not adequate enough to provide for high temperature recoveries.

Another problem to be solved is to obtain a maximum energy input when using a "lens"-collector system. Hereby it is necessary to get a maximum of a focus, i.e., to get a very pin-point focus onto a collector.

A second aspect of the invention relates to the use of the heated liquid medium such as in a heat converter converting heat into cold.

### Background of this second aspect of the invention

In earlier days a different compression technique was used to create cold, whereby a cold medium liquid is transferred into vapour at a relatively low pressure. The vapour is transferred into a state of higher pressure by means of the compressor in a condenser, wherein it is retransferred into a liquid state. At the condensation heat is released. The "hot" liquid is returned to the vaporizer via a closing valve.

Another type of cold generation is the absorption technique according to Carré. The events are similar to those appearing in a vaporization process using a compressor. The difference is that the compressor has been exchanged for a thermical compressor. The working medium is actually two media; one cooling medium and one absorption medium. Ammonia is often used as cooling medium and water is used as an absorption medium. The ammonium gas formed in the vaporizer will be absorbed in the aqueous solution in the absorber. The liquid is then heated to release the ammonia.

Both types of coolers consume electrical energy.

GB-A-1,172,829 relates to system for deriving solar energy comprising a elongated parallel tubes or parts to be irradiated by a lens system, where the lenses are construed to have a cross-section of a circle.

DE 40 07 839 A1 discloses a vacuum collector of a solar system comprising an absorber for transferring solar radiation into heat, whereby the collector housing a heat-transferring liquid carrying tube has two surfaces with different curves.

JP 58031254 relates to a collector of a solar heater, and in particular to a collector being able to correct the displacement of a focus due to the revolution of the earth by forming one part of a condenser lens by a liquid lens and injecting the liquid into the liquid lens and discharging it from the lens.

Another relevant document is represented by US-A-4279244 and represents the closest prior art.

The question today with regard to the environmental considerations is how we will be able to make use of the energy obtained during the pressure increase obtained when heating a liquid in a closed space. The earlier absorption fridge obtains its energy from an electrical heating insert or a gas flame, and converts this heat into cold.

### Summary of the present invention

The present invention will solve the problem mentioned above by providing a sun ray concentrating covering to a tube or tube system.

In particular the invention relates to a solar thermal heating system comprising one or more longitudinally extending heater elements fixed to each other to form a heater element covering, said heater element covering being arranged above a liquid tube space wherein a first liquid carrying tube is winding to and fro in a continuous line such that the parallel longitudinal parts of the tube have a distance from each other corresponding to the distance between each individual heater element, wherein a second liquid carrying tube is arranged in a second layer underneath the first liquid carrying tube, wherein each winding of the second liquid carrying tube is displaced vis-à-vis the liquid carrying tubes in the first layer, and in that said first liquid carrying tube is interconnected with the second liquid carrying tube by means of three-way valves; said liquid tube space being covered by a heating surface arranged to be individually turned and angled so as to adjust the distance between the heater element covering and the first liquid carrying tube.

A second aspect of the invention relates to a method for collecting solar energy using the above described solar thermal heating system wherein sun rays are directed onto one or more of the longitudinally extending heater elements; and said longitudinally extending heater elements focus the sun rays onto the top surface of the first liquid carrying tube and heat a liquid medium contained therein, said heated liquid medium providing secondary heat to a liquid medium contained in the second liquid carrying tube; and when heated the volume of the liquid medium contained in the first liquid carrying tube expands between neighboring three-way valves; and said volume increase creates a pressure that actuates the opening of the three-way valves in the first liquid carrying tube, and said opening actuates a pressure increase of the liquid medium in the second liquid carrying tube, and wherein the increased pressure through the three-way valve opening together with the volume expansion caused by the secondary heat increase result in an overall increase in both pressure and temperature of the liquid carrying medium contained in the second liquid carrying tube, and thereby a pumping effect is created.

### Detailed description of the present invention

In particular the present invention relates to a solar heater element providing an increased utilization of in coming sun rays, characterized in that it consists of at least one longitudinal body having a flat one side, and a convex second side, whereby the cross section of the element perpendicular to its longitudinal axis is that of a segment having a substantial ellipsoidal outer surface, whereby the arc of the said ellipsoidal surface is determined by the distance between the said element and a collected rays' focus to avoid spherical aberration.

In a preferred embodiment of the present invention the heater element is provided with a stepwise lower side each part of the stepwise surface providing a common focus.

In a preferred embodiment of the present invention the element is provided with outer cross-sections having the same height, and a central cross-section having a lower height. In a preferred embodiment of the invention the three way valve comprises a valve body comprising four joints for winding tubes placed in two layers and displaced visavi each other, i.e., the tubes in one layer is displaced visavi the tubes in a second layer. In the connection between the tubes in each layer a ball is placed which rests on a valve seat, and whereby there is a connecting cylindrical hollow stud in the valve body to be connected between the two layers, in which stud there is a piston valve and whereby the piston valve is actuated upon by the ball placed in connection with said stud.

Using a simple technique the pressure is increased in small steps, up to a level where the liquid used is vapourized and creates cold. The process is built completely upon existing physical laws and the use of simple mechanics.

The present invention will now be described with reference to some embodiments, however, without being restricted thereto. In the drawing attached hereto
FIG. 1 shows a single heater element according to the invention in a perspective view;
FIG. 2 shows a specific embodiment of a heater element according to the present invention;
FIG. 3A-B shows a set of heater elements according to the present invention;
FIG. 4 shows a solar thermal heating system comprising the heater elements with aspects of the present invention;
FIG. 5 shows aspects of the present invention where the heat generated is used to pump the heated liquid;
FIG. 6 shows a graph of the pumping effect obtained;
FIG. 7 shows a principal picture of a heat converter according to the second aspect of the invention;
FIG. 8 shows a three way valve used in the pumping described in connection with FIG. 5 seen from different angles;
FIG. 9 shows different embodiments of heat converter assemblies;
FIG. 10 shows the difference in possible accumulation of heat between a commonly used solar heater used, and a solar heater unit of the present invention;
FIG. 11 shows a graph of the outer arc of a solar heater element of the invention; and
FIG. 12 shows a second graph of the outer arc of a stepped solar heater element of the invention.

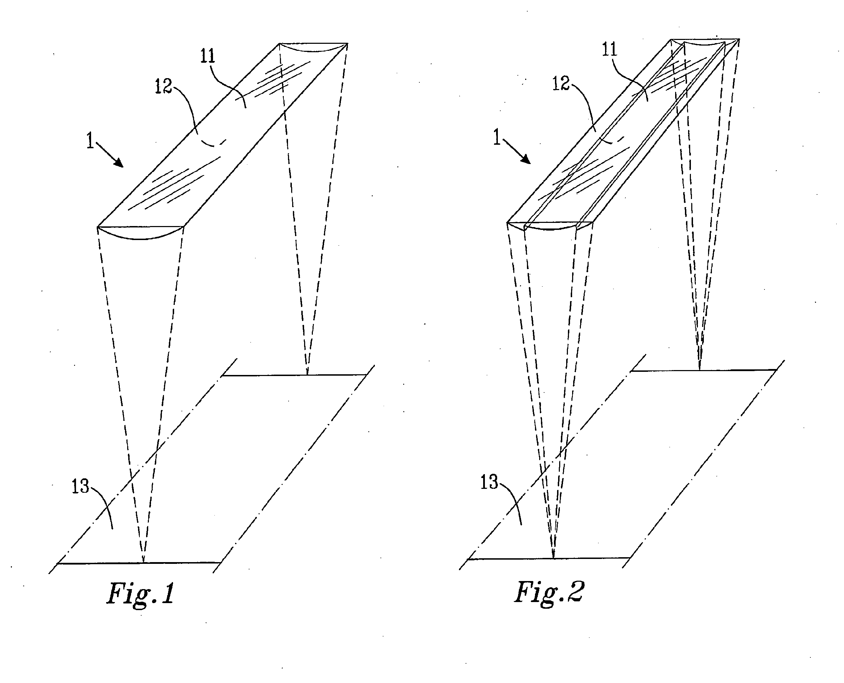

1 denotes generally a heater element according to the present invention having an upper flat side 2 intended to be directed to the sun, and a substantially concave lower surface 3 intended to be directed to a liquid pipe (not shown in FIG. 1). The element is made of a translucent, such as a transparent material, such as glass, being preferred, or a transparent polymer, such as a polycarbonate. The element has a general longitudinal extension and has a cross section, perpendicular to the longitudinal axis of the element, which consists of an ellipsoidal segment. The radius of the ellipsoidal segment is determined by the distance between the heater element and the outer surface of the liquid carrying tube. Thereby the distance is determined in such a way that the focus of the rays bent through the element is on the top surface of the liquid carrying tube.

The heater element 1 may in case they tend to become thick and thereby overdue heavy be construed with a stepwise lower side 3, as shown in FIG. 2. Thereby the focus will be the same but the material weight will become reduced as will as the energy loss through the material. The surface of the in coming sun rays is still flat. In this embodiment the outer 25% parts of the cross-section have one height, and the mid 50% of the cross-section has one lower height. It should be noted though that the arc of the concave surface is still the same at the outer as well as the mid-part.

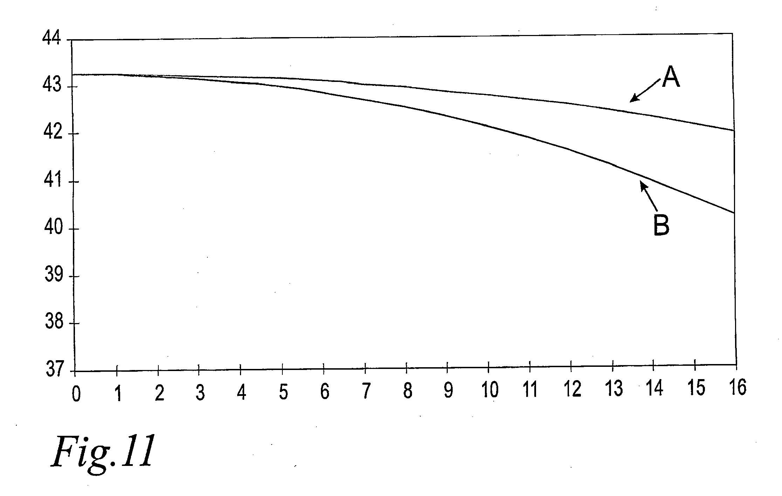

FIG. 11 shows the ellipsoidal curve A as calculated in relation to a circular segment curve B (circle radius) for a glass element where the aim is to provide a pinpoint focus. This is to avoid spherical aberration The radius is given in relation focus distance. The focus is normally believed to be obtained by a lens having a cross-section consisting of a circular segment. It has however turned out that the cross-section should be a part of an ellipsoid to provide for a pinpoint focus, whereby a higher energy yield is obtained..

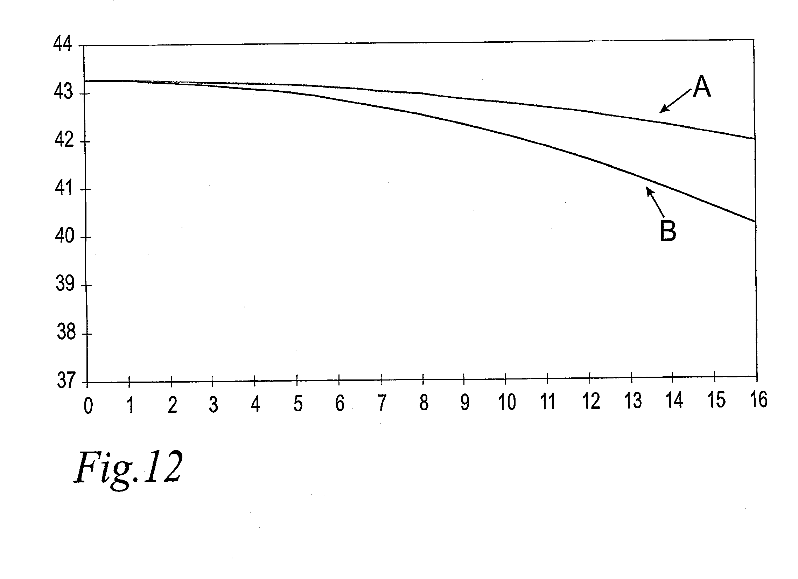

FIG. 12 shows the ellipsoidal curve A in relation to a circular segment curve B for an one-step glass element (shown in FIG. 2), where the aim is to provide a pinpoint focus. The radius is given in relation focus distance.

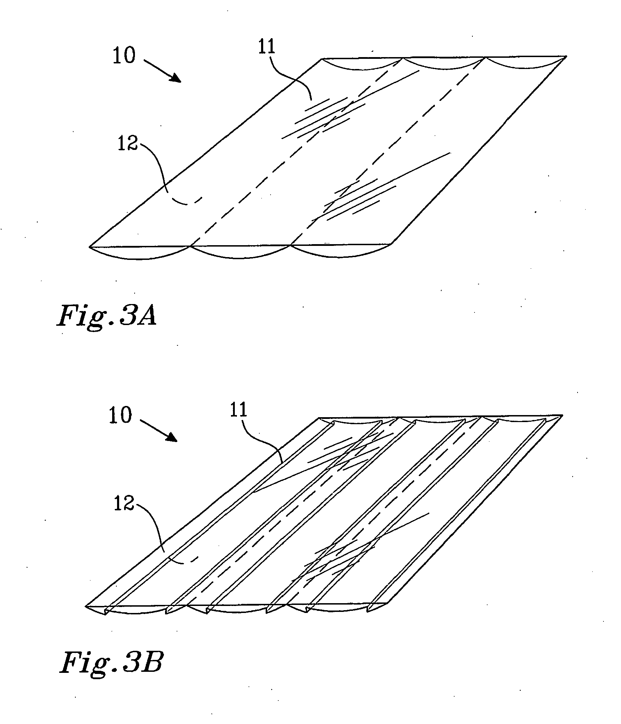

In FIG. 3 a set of heater elements makes up a covering 10 of a solar heater unit housing 41. Hereby the cover consists of a number of heater elements 1 being integrally connected side by side thereby showing an upper flat side 11, and a lower surface 12. The lower side 12 thereby is arranged to provide a number of parallel, equally focused ray lines intended to hit the top surface 13 of an equal number of liquid carrying tubes.

The liquid carrying tubes 4 normally carry water as the medium to become heated, although other liquid media can be used, such as a lower alkanol, such as methanol or ethanol, or an aqueous solution of a salt, e.g., for avoiding freezing damages in case of frost.

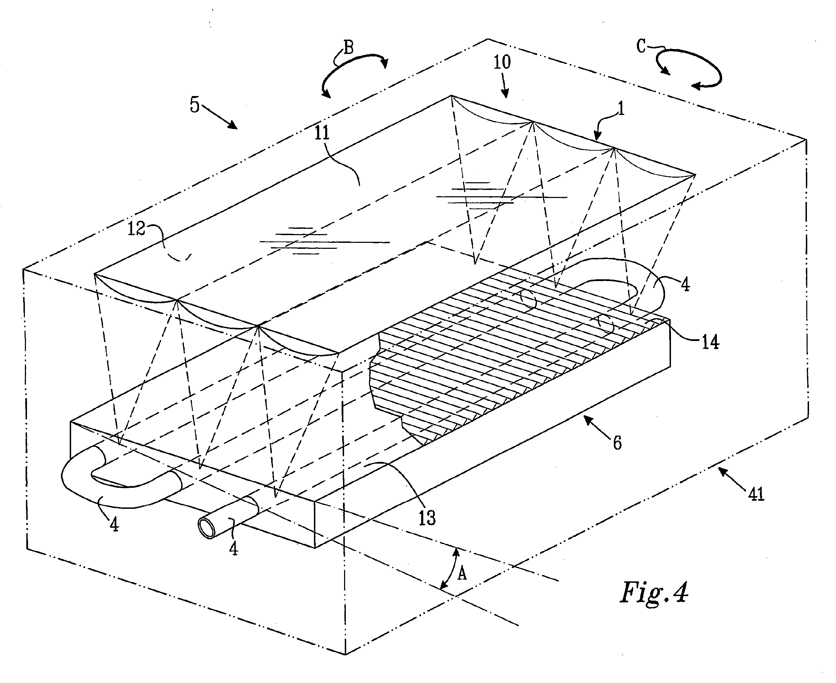

In FIG. 4 a more complete solar heater unit 5 is shown consisting of a liquid tube space 6, preferably painted in white or being made of a polished metal on its inside, and made of any suitable material, such as wood or preferably a light weight metal, such as aluminium or an aluminium alloy. When needed from a construction point of view such as due to proposed heavy loads it may be made of steel, such as a stainless steel quality. In the space 6 a liquid carrying tube 4 is winding to and fro to form a continuous line within the space 6, whereby the parallel longitudinal parts of the tube are placed at a distance from each other corresponding to the distance between the heater elements 1 placed above the tube winding 4. The heater elements 1 are integrally moulded together to form heater element discs having a suitable size to be handled. A suitable size of the heater element disc may, for example be a 1 square meter, having the dimension 1 m x 1 m. To provide the energy required by the house or otherwise the space 6 is given a suitable size, and a suitable number of heater element discs are provided above the space 6. The discs are attached detachably fixed to each other on the top of the space 6 preferably in a water tight fashion to avoid rain water to enter the void between the space 6 and the heater elements 1. The space 6 is however, provided with one or more openings in the lower frame to allow any water, rain or condensed water to drain off. Thus when determining the size of a solar heater unit 5 one has to consider the amount of energy needed as well as the amount of energy provided by the sun. To optimize the energy input the solar heater unit may be placed in a rack which can be turned to face the sun at best angle.

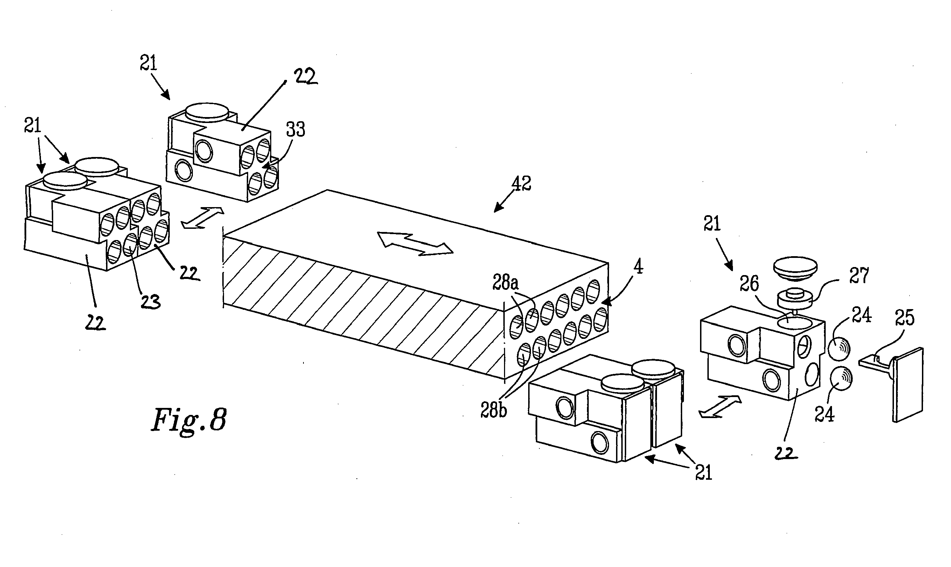

As shown in FIG. 8 the tubes 4 may be arranged in a cast plate 42 containing a required number of tubes in two layers.

If the solar heater unit is used to complement any other heating system of a house or other facility the solar heater unit may be placed on the roof facing the major sun rays coming in, such as a south facing roof having an angle of 30 to 45° to the sky. The total solar heater unit can be turned to face the sun in any optimal way in accordance with the arrows B and C in FIG. 4. Thus the surface of the solar heater unit can be turned to provide for a perpendicularly in coming sun ray, whereby two rotations axis are applied to fulfil this requirement.

The solar heater can be used for heating water for housing purposes, such as hot water or mere heating during colder time periods, or for heating pool water. However, a specific embodiment of the invention utilizes the hot liquid for cooling purposes in e.g., an air conditioning equipment.

It has turned out that the temperature of the liquid transporting tube can be increased by more than 60%, which means a highly effective down-load of solar energy. However, an increase with more than 30% above a commonly known solar heater unit in the form of a tube winding placed in a black box covered with a glassing sheet and facing the sun in an optimal way, may be acceptable, preferably though more than 40%, more preferably more than 50%.

The tube winding receiving space 6 is preferably covered by a heating surface 13, which can be individually turned and angled visavi the incoming sun rays as shown by the arrow A. Thereby the distance between the winding surface and the cover can be adjusted. The heating surface 13 is placed in a relative neighbourhood of the tube winding in comparison to the distance between heating surface 13 and the solar heating device 1. Preferably such a heating surface 13 consists of a folded surface where the direction of the folds 14 is placed substantially perpendicular to the direction of the tube windings. The angle between the fold surfaces is normally 60°, but may be varied due to the sun height over the horizon. The use of a folded surface increases the efficiency of the incoming energy of the sun rays. By using a variable angle of the heating surface 13 the temperature obtained on the underlying surface of the tube windings 4 can be varied to optimize the heating of the liquid passing through the windings.

The incoming solar heat generated by the solar heater device of above can be used to generate cold in a system as will be described below.

The system according to the invention comprises a double layer of tube windings, which layers are interconnected by means of tube studs and three way valves 21. The three way valve can also be defined as a through-flow valve having a sideway outlet.(FIG. 8).

The valve body 22 comprises four joints 23 for tubes placed in two layers and displaced visavi each other, i.e., the tubes in one layer is displaced visavi the tubes in a second layer. In the connection between the tubes in each layer a ball 24 is placed which rests a valve seat 25. In the valve body 22 there is a connecting cylindrical hollow stud 26 between the two layers in which stud 26 there is a piston valve 27. The piston valve 27 is actuated upon by the ball 24 placed in connection to said stud 26.

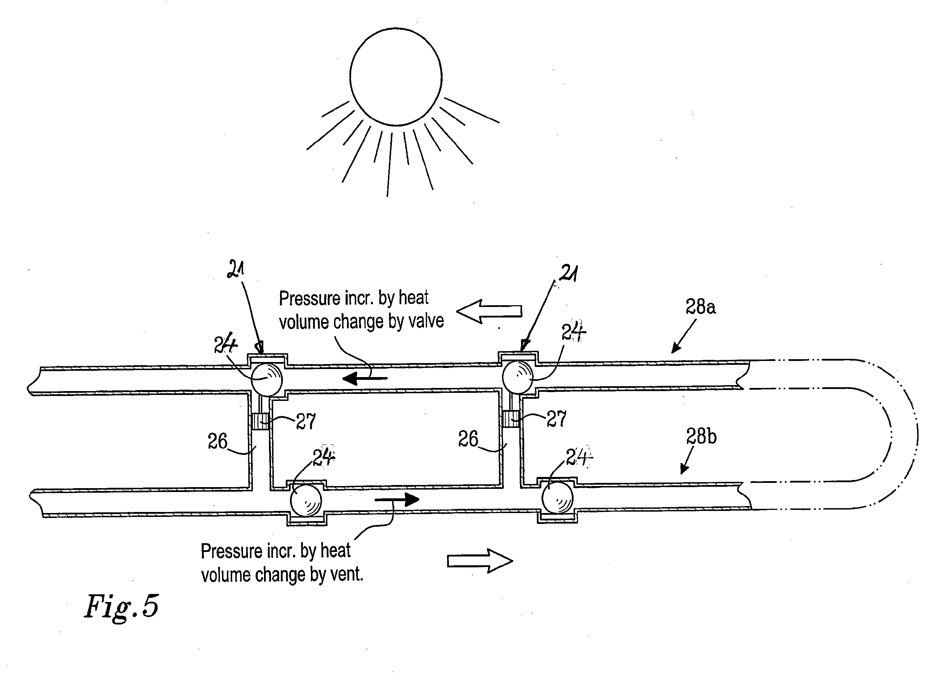

A schematic view is shown in FIG. 5 where a number of valves 21 are placed in a first tube winding 28a, at regular intervals, and a similar number of valves 21 are placed in a second tube winding 28b. A primary heating source, such as via a solar heater device 1 is providing heat upon the first tube winding 28a, which provides a secondary heat on the second tube winding 28b. When the liquid medium in the tube winding 28a is heated the liquid will expand e.g., within the volume between two neighbouring valves 21. Thereby a pressure will be created which pushes upon the ball valve 24, which opens and simultaneously presses the piston valve 27, thereby creating a pressure in the second winding 28b. Thus liquid will pass both along the first tube winding 28a as well as creating a pressure on the liquid of the second winding 28b allowing the ball valves 24 present therein to open and allow liquid therein to pass on. This will happen in combination with the heat expansion provided on the liquid by the secondary heat. Thereby a pumping effect will be obtained. This effect will be used to create cold by a more or less ordinary compression cooling method and means. Thus one main object is to obtain a pressure increase of the liquid heated, thereby providing for a use of the heated liquid in a compression cooling apparatus, such as a cooling cabinet.

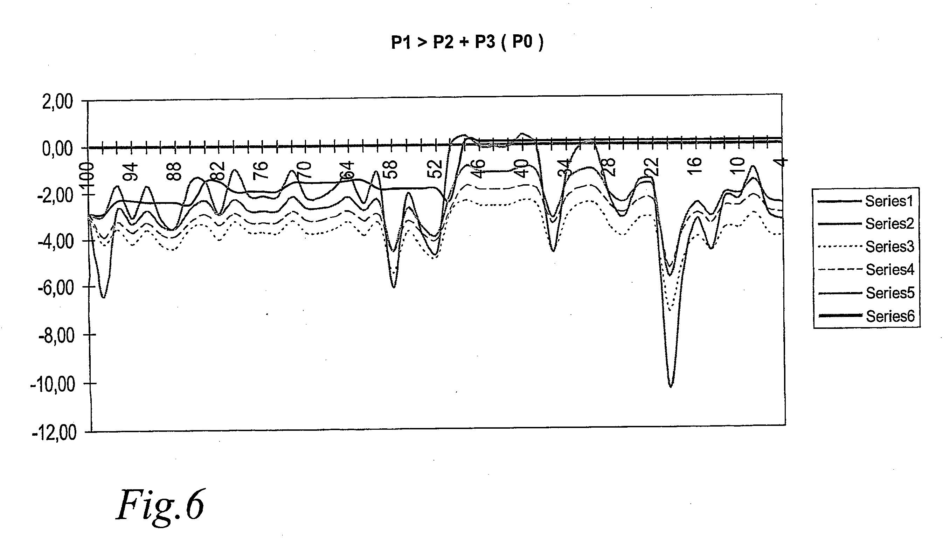

The pumping effect is shown in the graph of FIG. 6 where the opening and closing of the different valves are shown in the wave form given for an ingoing water temperature of 9.9°C and a top temperature of 100°C.

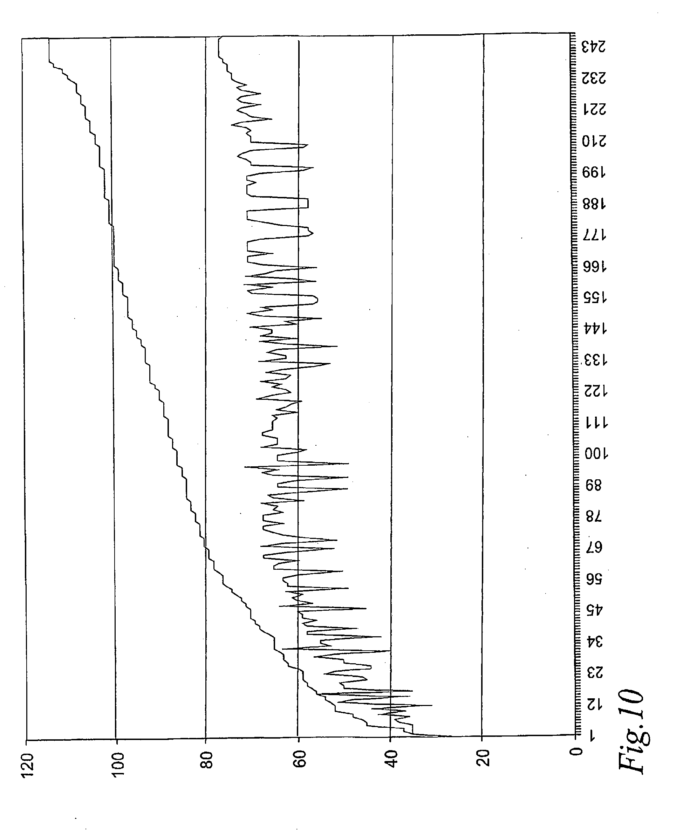

FIG. 10 shows the difference in possible accumulation of heat between a commonly used solar heater used, and a solar heater unit of the present invention. The lower curve relates to the commonly used solar heater unit, while the upper one relates to the heat accumulated using the present invention. As evident the prior art solar heater unit is not capable of raising the temperature above about 60°C, while the solar heater of the present invention continues to raise the temperature to above 120°C.

To produce cold when it is needed as best requires energy. In most cases it is a question of electrical energy. Todays society requires large amounts of energy to create cold to provide the comfort requested, in situations ranging from the public community to the home. We need cold to preserve and store food and feedstuffs, to create a pleasant or comfortable environment when the outdoor temperature is high, and tends to rise even more. The advantage of the present invention is to create even more cold when the heat from the sun increases in a proportional way. The demand is fully meet.

The commercial use is very great. Savings calculated in terra watt hours per annum by generating cold using the present converter will, over time, become very realistic. Today heat can be accumulated in isolated tanks. In the same way cold can be stored to level out the need over time. The maintenance costs over time will be low as the wear of the components used is small. The environment is another winner when the present converter is used instead of fossil fuels.

Besides the above mentioned needs the present converter can be used for cold and can generate snow, such as to exercise and competition parks for ski sport.

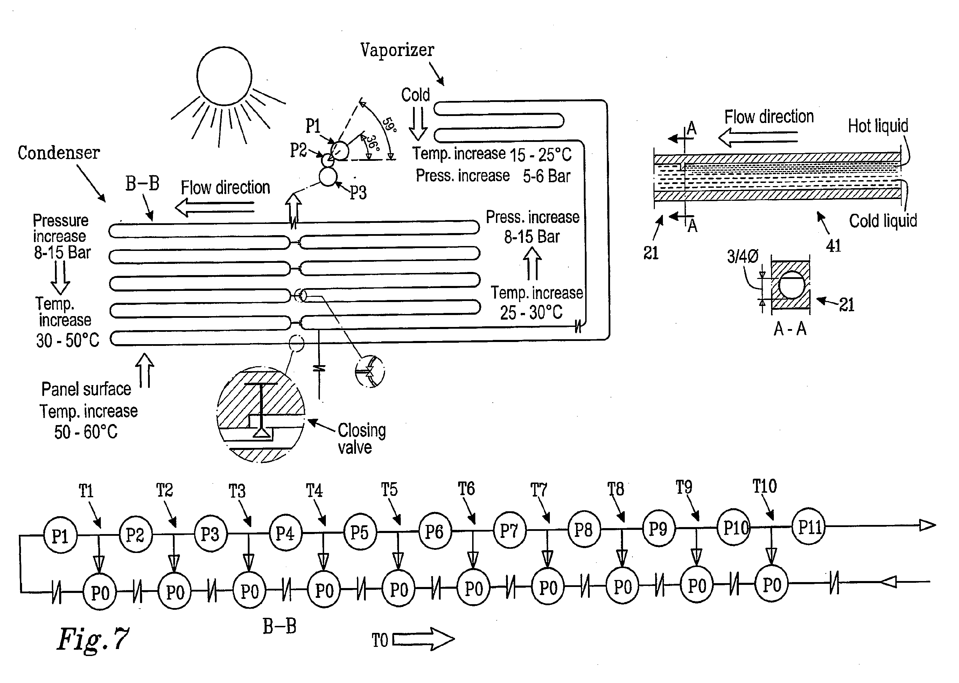

The heat converter functions in accordance with the scheme according to FIG. 7. In order to achieve an increase of effect and a more rapid increase of the temperature it is also shown a reduction of the flow to as much as 75 % of the diameter. This is carried out at each level of the system.

The different model types of panels are contemplated. These are contemplated together with a thermostatic expansion valve being a precision device to regulate the fluid flow to evaporation being in phase with the value of a determined value to obtain evaporation. This is the main function but as all reducing functions this provides a cooling effect.

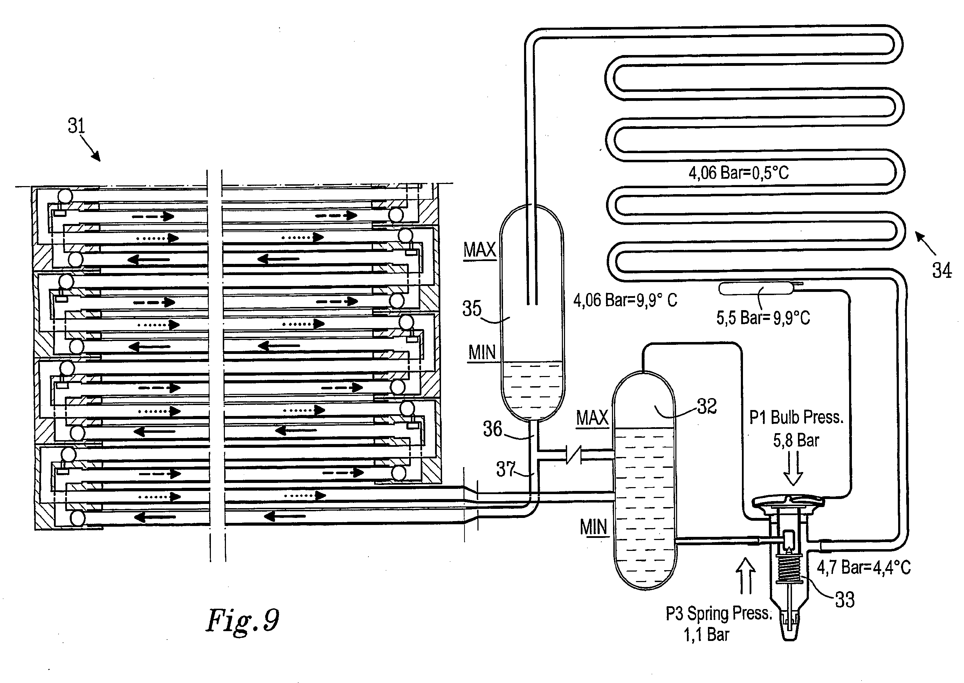

FIG. 9 shows a set of two layer windings, generally denoted 31, where in the lower left part of the figure hot water generated is transferred by the pumping mechanism obtained a expansion, is transferred into an expansion vessel 32 from where it is transferred to the thermostatic expansion valve 33 (to be explained more in detail below), where the cold will be generated and used in a cooling winding 34 before the liquid is transferred back to a second expansion vessel 35. The two expansion vessels 32 and 35 can be interconnected via tube 36 to be able to adjust the amount of liquid in both vessels 32 and 35. The outlet 36 of vessel 35 is connected as a return tube 37 to the heat generator.

Furthermore, there are disclosed two vessels for an intermediate storage of cooling media. The flow of cooling medium via the expansion valve is carried out from the neighbouring vessel when the pressure has increased to a predetermined value. When the pressure in the vessel has decreased there is a return flow via the return valve from the following vessel. This means that cooling medium is not reheated by means of the heat converter but only that a pressure application is made from this.

### Function of the expansion valve 33

The valve is exposed to three different forces acting to open or close the valve 33. As evident from the panel drawings there are 2 (two) closing forces, P2 and P3, and 1 (one) opening force, P1, The picture discloses a valve 33 being set at equilibrium. If the evaporation pressure should increase the valve closes i.e., P2 + P3 will be larger than P1. If, however, the bulb pressure should increase the valve 33 will open i.e., P1 will be greater than P2 + P3.

The expansion valve 33, being, for example preset from the manufacturer, has a fixed overheating set point of -14°C. Fixed overheating is equal to how much overheating that is needed to get the valve needle to move. All overheating over this point is related to a gradient. The manufacturer calibrates quite often between +4°C to -14°C of gradient overheating. The combination of these two means that at -12°C to +12°C of total overheating the valve will be open until its full capacity has been met. It should be noted that this set point of overheating is set at the outlet of the evaporator and not at the heat converter, and thus a value of 15°C overheating at the compressor is quite normal.

According to the present embodiment the pressure of the cooling medium is 4.7 bars at 4.4°C which is the maximum of R22 (denotation of a commonly used cooling medium). When the medium passes through the evaporator it will obtain a reduction of the pressure of 0.68 bars. Now having a pressure of the cooling medium of 4.02 bars the maximum temperature is 0.5°C. As soon as the cooling medium is vapourized an overheating will be applied thereto, and the situation after evaporation is that there is a gas having a low temperature and low pressure of 4.06 bars at 9.9°C. At 4.06 bar the maximum temperature is 0.5°C and the temperature of the cooling medium leaving the evaporator is 9.9°C. It means that there is an overheating of -8.3°C. Maximum temperature minus outgoing temperature is equal to overheating. As the overheating set is -12°C, the bulb pressure 5.8 bars is larger than the evaporator pressure at the external equilibrium port and the spring pressure (5.8 > 4.06 + 1.1). Thus the valve will open and allow more of cooling medium to enter the evaporator. If an external equilibrium expansion valve had not been in use in this example the valve had been closed at the equilibrium point and had not allowed cooling medium to enter (5.8 = 4.7 + 1.1).

In the Table below the different temperatures achieved at different distances from the solar heater 1 is given: The temperature of the solar heater unit at test start is 75°C.

**Table**

| Distance | Factor | Focus line Width | Distance mm | Focus line temp (°C) |
|---|---|---|---|---|
| 0 | 1 | 20 | 22 | 75.0 |
| 30 | 1.017 | 19.5 | 23 | 76.3 |
| 60 | 1.034 | 19 | 24 | 77.6 |
| 90 | 1.051 | 18.5 | 25 | 78.8 |
| 180 | 1.102 | 17 | 28 | 82.7 |
| 360 | 1.204 | 14 | 34 | 90.3 |
| 540 | 1.308 | 11 | 40 | 98.0 |
| 720 | 1.408 | 8 | 46 | 105.6 |
| 900 | 1.51 | 5 | 52 | 113.3 |
| 1080 | 1.612 | 2 | 58 | 120.9 |

## Claims

1. A solar thermal heating system comprising one or more longitudinally extending heater elements (1) fixed to each other to form a heater element covering (10), said heater element covering (10) being arranged above a liquid tube space (6) wherein a first liquid carrying tube (28a) is winding to and fro in a continuous line such that the parallel longitudinal parts of the tube have a distance from each other corresponding to the distance between each individual heater element (1),
the liquid tube space (6) is covered by a heating surface (13),
a second liquid carrying tube (28b) is arranged in a second layer underneath the first liquid carrying tube (28a), wherein each winding of the second liquid carrying tube (28b) is displaced vis-à-vis the liquid carrying tubes in the first layer, **characterized in that in that** said first liquid carrying tube (28a) is interconnected with the second liquid carrying tube (28b) by means of three-way valves (21); and **in that** the heating surface (13) is arranged to be individually turned and angled so as to adjust the distance between the heater element covering (10) and the first liquid carrying tube (28a).

2. A solar thermal heating system according to claim 1, **characterized in that** the one or more heating elements (1) of the heater element covering (10) have an upper flat side (11), and a convex lower surface (12), the lower part of which has a cross section perpendicular to the longitudinal axis of the element that is ellipsoidal.

3. A solar thermal heating system according to claim 1, **characterized in that** the one or more heating elements (1) of the heater element covering (10) have an upper flat side (11), and a convex lower surface (12), the lower part of which has a cross section perpendicular to the longitudinal axis of the element that is stepwise ellipsoidal such that the outer 25 % part of the cross section on each side of the element has a height that is higher than the middle part both providing a common focus.

4. A solar thermal heating system according to claim 3, **characterized in that** the heating surface (13) has a folded surface wherein the angle between the surface folds (14) is adjustable.

5. A solar thermal heating system according to claim 1, **characterized in that** the three-way valve is a through-flow valve with a cylindrical hollow tube stud (26) connecting the first liquid carrying tube (28a) with the second liquid carrying tube (28b), said three-way valve further comprising a ball (24) resting in a valve seat (25) above a piston valve (27), said piston valve being slidingly arranged in the cylindrical hollow tube stud (26).

6. A solar thermal heating system according to claim 1, **characterized in that** said three-way valves (21) comprise a valve body (22), said valve body comprising four joints (23) for liquid carrying tubes (28a, b) placed in two layers and displaced vis-à-vis each other.

7. A solar thermal heating system according to claim 1, **characterized in that** the solar thermal heating system can be turned in order to provide for the sun rays to be directed perpendicularly to the surface of the heater element covering (10).

8. The use of a solar thermal heating system according to claim 1, **characterized in that** the solar thermal heating system is connected to a heating system to generate heat.

9. The use of a solar thermal heating system according to claim 1, **characterized in that** the solar thermal heating system is connected to a cooling system to generate cold.

10. A method for collecting solar energy using the solar thermal heating system according to claims 1-7, wherein:
sun rays are directed onto one or more of the longitudinally extending heater elements (1);
said one or more longitudinally extending heater elements (1) focus the sun rays onto the top surface of the first liquid carrying tube (28a) and heat a liquid medium contained therein, said heated liquid medium providing secondary heat to a liquid medium contained in the second liquid carrying tube (28b); and
when heated the volume of the liquid medium contained in the first liquid carrying tube (28a) expands between neighboring three-way valves (21); and
said volume increase creates a pressure that actuates the opening of the three-way valves (21) in the first liquid carrying tube (28a), and
said opening actuates a pressure increase of the liquid medium in the second liquid carrying tube (28b), and
wherein the increased pressure through the three-way valve opening together with the volume expansion caused by the secondary heat increase result in an overall increase in both pressure and temperature of the liquid carrying medium contained in the second liquid carrying tube (28b), and
thereby a pumping effect is created.

11. A method according to claim 10, wherein the volume expansion of the liquid medium between neighboring three-way valves (21) in the first liquid carrying tube (28a) creates a pressure which pushes upon the ball valve (24) whereby said ball valve (24) opens and simultaneously presses down the piston valve (27) to create a pressure in the second liquid carrying tube (28b).

12. A method according to claim 10, wherein the distance between the first liquid carrying tube (28a) contained in the liquid tube space (6) and the heater element covering (10) is adjusted.

13. A method according to claim 10, wherein the surface folds (14) of the heating surface (13) are adjusted to optimize the direction of the sun rays onto the top surface of the first liquid carrying tube (28a).

14. A method according to claims 10, wherein the overall increase in pressure and temperature is used to create heat in a heating system.

15. A method according to claim 11, wherein the overall increase in pressure and temperature is used to create cold in a cooling system.

## Patentansprüche

1. Solarwärme-Heizsystem, umfassend ein oder mehrere längs verlaufende Heizelemente (1), die aneinander befestigt sind, um eine Heizelementabdeckung (10) zu bilden, wobei die Heizelementabdeckung (10) über einem Flüssigkeitsrohrraum (6) angeordnet ist, in dem ein erstes Flüssigkeit führendes Rohr (28a) sich in einer kontinuierlichen Linie hin und her windet, so dass die parallelen längsgerichteten Teile des Rohres zueinander eine Distanz aufweisen, die der Distanz zwischen den einzelnen Heizelementen (1) entspricht,
der Flüssigkeitsrohrraum (6) mit einer Heizoberfläche (13) bedeckt ist,
ein zweites Flüssigkeit führendes Rohr (28b) in einer zweiten Lage unterhalb des ersten Flüssigkeit führenden Rohres (28a) angeordnet ist, wobei jede Windung des zweiten Flüssigkeit führenden Rohres (28b) gegenüber den Flüssigkeit führenden Rohren in der ersten Lage versetzt ist,
**dadurch gekennzeichnet, dass**
das erste Flüssigkeit führende Rohr (28a) mittels Dreiwegeventilen (21) mit dem zweiten Flüssigkeit führenden Rohr (28b) verbunden ist und dass die Heizoberfläche (13) dazu angeordnet ist, individuell gedreht und angewinkelt zu sein, um die Distanz zwischen der Heizelementabdeckung (10) und dem ersten Flüssigkeit führenden Rohr (28a) einzustellen.

2. Solarwärme-Heizsystem nach Anspruch 1, **dadurch gekennzeichnet, dass** das eine oder die mehreren Heizelemente (1) der Heizelementabdeckung (10) eine obere flache Seite (11) und eine konvexe untere Oberfläche (12) aufweisen, deren unterer Teil senkrecht zu der Längsachse des Elementes einen Querschnitt aufweist, der ellipsoidisch ist.

3. Solarwärme-Heizsystem nach Anspruch 1, **dadurch gekennzeichnet, dass** das eine oder die mehreren Heizelemente (1) der Heizelementabdeckung (10) eine obere flache Seite (11) und eine konvexe untere Oberfläche (12) aufweisen, deren unterer Teil senkrecht zu der Längsachse des Elementes einen Querschnitt aufweist, der in der Weise stufenweise ellipsoidisch ist, dass der 25% einnehmende äußere Teil des Querschnittes auf jeder Seite des Elementes eine Höhe aufweist, die höher als der mittlere Teil ist, wobei beide einen gemeinsamen Brennpunkt bereitstellen.

4. Solarwärme-Heizsystem nach Anspruch 3, **dadurch gekennzeichnet, dass** die Heizoberfläche (13) eine gefaltete Oberfläche aufweist, wobei der Winkel zwischen den Oberflächenfalten (14) einstellbar ist.

5. Solarwärme-Heizsystem nach Anspruch 1, **dadurch gekennzeichnet, dass** das Dreiwegeventil ein Durchgangsventil mit einem zylindrischen hohlen Nippel (26) ist, der das erste Flüssigkeit führende Rohr (28a) mit dem zweiten Flüssigkeit führenden Rohr (28b) verbindet, wobei das Dreiwegeventil weiterhin eine Kugel (24) umfasst, die in einem Ventilsitz (25) über einem Kolbenventil (27) liegt, wobei das Kolbenventil gleitbeweglich in dem zylindrischen hohlen Nippel (26) angeordnet ist.

6. Solarwärme-Heizsystem nach Anspruch 1, **dadurch gekennzeichnet, dass** die Dreiwegeventile (21) einen Ventilkörper (22) umfassen, wobei der Ventilkörper vier Verbindungen (23) für Flüssigkeit führende Rohre (28a, b) umfasst, die in zwei Lagen platziert und gegeneinander versetzt sind.

7. Solarwärme-Heizsystem nach Anspruch 1, **dadurch gekennzeichnet, dass** das Solarwärme-Heizsystem drehbar ist, um zu ermöglichen, dass die Sonnenstrahlen senkrecht zu der Oberfläche der Heizelementabdeckung (10) gerichtet sind.

8. Verwendung eines Solarwärme-Heizsystems nach Anspruch 1, **dadurch gekennzeichnet, dass** das Solarwärme-Heizsystem mit einem Heizsystem verbunden ist, um Wärme zu erzeugen.

9. Verwendung eines Solarwärme-Heizsystems nach Anspruch 1, **dadurch gekennzeichnet, dass** das Solarwärme-Heizsystem mit einem Kühlsystem verbunden ist, um Kälte zu erzeugen.

10. Verfahren zum Sammeln von Solarenergie unter Verwendung des SolarwärmeHeizsystems nach Anspruch 1-7, wobei:
Sonnenstrahlen auf eines oder mehrere der längs verlaufenden Heizelemente (1) gerichtet werden;
das eine oder die mehreren längs verlaufenden Heizelemente (1) die Sonnenstrahlen auf die obere Oberfläche des ersten Flüssigkeit führenden Rohres (28a) fokussieren und ein darin enthaltenes flüssiges Medium erhitzen, wobei das erhitzte flüssige Medium einem in dem zweiten Flüssigkeit führenden Rohr (28b) enthaltenen flüssigen Medium sekundäre Wärme zuführt; und
das Volumen des in dem ersten Flüssigkeit führenden Rohr (28a) enthaltenen flüssigen Mediums sich im erhitzten Zustand zwischen benachbarten Dreiwegeventilen (21) ausdehnt und
die Volumenerhöhung einen Druck erzeugt, der die Öffnung der Dreiwegeventile (21) in dem ersten Flüssigkeit führenden Rohr (28a) auslöst, und
die Öffnung eine Druckerhöhung des flüssigen Mediums in dem zweiten Flüssigkeit führenden Rohr (28b) auslöst und
wobei der erhöhte Druck durch die Dreiwegeventil-Öffnung zusammen mit der durch den Anstieg der sekundären Wärme bewirkten Volumenausdehnung zu einer Gesamterhöhung sowohl des Druckes als auch der Temperatur des in dem zweiten Flüssigkeit führenden Rohr (28b) enthaltenen flüssigen Trägermediums führt und
dadurch eine Pumpwirkung erzeugt wird.

11. Verfahren nach Anspruch 10, wobei die Volumenausdehnung des flüssigen Mediums zwischen benachbarten Dreiwegeventilen (21) in dem ersten Flüssigkeit führenden Rohr (28a) einen Druck erzeugt, der auf das Kugelventil (24) drückt, wodurch das Kugelventil (24) sich öffnet und gleichzeitig das Kolbenventil (27) nach unten drückt, um einen Druck in dem zweiten Flüssigkeit führenden Rohr (28b) zu erzeugen.

12. Verfahren nach Anspruch 10, wobei die Distanz zwischen dem ersten Flüssigkeit führenden Rohr (28a), das in dem Flüssigkeitsrohrraum (6) enthalten ist, und der Heizelementabdeckung (10) eingestellt wird.

13. Verfahren nach Anspruch 10, wobei die Oberflächenfalten (14) der Heizoberfläche (13) eingestellt werden, um die Ausrichtung der Sonnenstrahlen auf die obere Oberfläche des ersten Flüssigkeit führenden Rohres (28a) zu optimieren.

14. Verfahren nach Anspruch 10, wobei die Gesamterhöhung des Druckes und der Temperatur zur Erzeugung von Wärme in einem Heizsystem verwendet wird.

15. Verfahren nach Anspruch 11, wobei die Gesamterhöhung des Druckes und der Temperatur zur Erzeugung von Kälte in einem Kühlsystem verwendet wird.

## Revendications

1. Système de chauffage thermique solaire comprenant un ou plusieurs éléments chauffants s'étendant longitudinalement (1) fixés les uns aux autres pour former une couverture d'éléments chauffants (10), ladite couverture d'éléments chauffants (10) étant placée au-dessus d'un espace de tube à liquide (6) dans lequel un premier tube transportant un liquide (28a) s'enroule en va-et-vient en une ligne continue de telle manière que les parties longitudinales parallèles du tube ont une distance entre elles qui correspond à la distance entre les éléments chauffants individuels (1), l'espace de tube à liquide (6) est recouvert d'une surface chauffante (13), un deuxième tube transportant un liquide (28b) est placé dans une deuxième couche sous le premier tube transportant un liquide (28a), dans lequel chaque enroulement du deuxième tube transportant un liquide (28b) est déplacé par rapport aux tubes transportant un liquide de la première couche, **caractérisé en ce que** ledit premier tube transportant un liquide (28a) est interconnecté avec le deuxième tube transportant un liquide (28b) au moyen de robinets à trois voies (21) ; et **en ce que** la surface chauffante (13) est agencée pour être tournée et orientée individuellement de manière à régler la distance qui sépare la couverture d'éléments chauffants (10) du premier tube transportant un liquide (28a).

2. Système de chauffage thermique solaire selon la revendication 1, **caractérisé en ce que** lesdits un ou plusieurs éléments chauffants (1) de la couverture d'éléments chauffants (10) ont une face supérieure plate (11), et une surface inférieure convexe (12), dont la partie inférieure a une section transversale perpendiculaire à l'axe longitudinal de l'élément qui est ellipsoïdale.

3. Système de chauffage thermique solaire selon la revendication 1, **caractérisé en ce que** lesdits un ou plusieurs éléments chauffants (1) de la couverture d'éléments chauffants (10) ont une face supérieure plate (11), et une surface inférieure convexe (12), dont la partie inférieure a une section transversale perpendiculaire à l'axe longitudinal de l'élément qui est ellipsoïdale par paliers de telle manière que la partie des 25 % extérieurs de la section transversale de chaque côté de l'élément a une hauteur qui est supérieure à celle de la partie médiane, toutes deux donnant un foyer commun.

4. Système de chauffage thermique solaire selon la revendication 3, **caractérisé en ce que** la surface chauffante (13) a une surface pliée, dans laquelle l'angle entre les plis de surface (14) est réglable.

5. Système de chauffage thermique solaire selon la revendication 1, **caractérisé en ce que** le robinet à trois voies est un robinet d'écoulement comportant une tige tubulaire creuse cylindrique (26) qui relie le premier tube transportant un liquide (28a) au deuxième tube transportant un liquide (28b), ledit robinet à trois voies comprenant en outre une bille (24) qui repose sur un siège de robinet (25) au-dessus d'un piston-valve (27), ledit piston-valve étant placé de façon glissante dans la tige tubulaire creuse cylindrique (26).

6. Système de chauffage thermique solaire selon la revendication 1, **caractérisé en ce que** ledit robinet à trois voies (21) comprend un corps de robinet (22), ledit corps de robinet comprenant quatre jonctions (23) pour des tubes transportant un liquide (28a,b) disposés en deux couches et décalés les uns par rapport aux autres.

7. Système de chauffage thermique solaire selon la revendication 1, **caractérisé en ce que** le système de chauffage thermique solaire peut être tourné afin d'assurer une orientation perpendiculaire des rayons du soleil par rapport à la surface de la couverture d'éléments chauffants (10).

8. Utilisation d'un système de chauffage thermique solaire selon la revendication 1, **caractérisé en ce que** le système de chauffage thermique solaire est connecté à un système de chauffage pour produire de la chaleur.

9. Utilisation d'un système de chauffage thermique solaire selon la revendication 1, **caractérisé en ce que** le système de chauffage thermique solaire est connecté à un système de refroidissement pour produire du froid.

10. Procédé de collecte d'énergie solaire utilisant le système de chauffage thermique solaire selon les revendications 1 à 7, dans lequel :
les rayons du soleil sont dirigés sur un ou plusieurs des éléments chauffants s'étendant longitudinalement (1) ;
lesdits un ou plusieurs éléments chauffants s'étendant longitudinalement (1) concentrent les rayons du soleil sur la surface supérieure du premier tube transportant un liquide (28a) et chauffent un milieu liquide qui y est contenu, ledit milieu liquide chauffé fournissant de la chaleur secondaire à un milieu liquide contenu dans le deuxième tube transportant un liquide (28b) ; et
lorsqu'il est chauffé, le milieu liquide contenu dans le premier tube transportant un liquide (28a) augmente de volume en se dilatant entre des robinets à trois voies voisins (21) ; et
ladite augmentation de volume crée une pression qui actionne l'ouverture des robinets à trois voies (21) dans le premier tube transportant un liquide (28a), et
ladite ouverture provoque une augmentation de pression du milieu liquide dans le deuxième tube transportant un liquide (28b), et
dans lequel la pression augmentée par l'ouverture des robinets à trois voies et l'augmentation de volume causée par l'augmentation de chaleur secondaire se traduisent par une augmentation globale de la pression et de la température du milieu de transport liquide contenu dans le deuxième tube transportant un liquide (28b), et
de ce fait un effet de pompage est créé.

11. Procédé selon la revendication 10, dans lequel l'augmentation de volume du milieu liquide entre des robinets à trois voies voisins (21) dans le premier tube transportant un liquide (28a) crée une pression qui pousse la bille (24), moyennant quoi ledit robinet à bille (24) s'ouvre et pousse simultanément le piston-valve (27) vers le bas pour créer une pression dans le deuxième tube transportant un liquide (28b).

12. Procédé selon la revendication 10, dans lequel on règle la distance qui sépare le premier tube transportant un liquide (28a) contenu dans l'espace de tube à liquide (6) de la couverture d'éléments chauffants (10).

13. Procédé selon la revendication 10, dans lequel les plis de surface (14) de la surface chauffante (13) sont réglés pour optimiser la direction des rayons du soleil qui arrivent sur la surface supérieure du premier tube transportant un liquide (28a).

14. Procédé selon la revendication 10, dans lequel l'augmentation globale de pression et de température est utilisée pour créer de la chaleur dans un système de chauffage.

15. Procédé selon la revendication 11, dans lequel l'augmentation globale de pression et de température est utilisée pour créer du froid dans un système de refroidissement.
